(19) Europäisches Patentamt
European Patent Office
Office européen des brevets

(11) EP 4 534 187 A1

(12) EUROPEAN PATENT APPLICATION
published in accordance with Art. 153(4) EPC

(43) Date of publication:
09.04.2025 Bulletin 2025/15

(21) Application number: 23816172.3

(22) Date of filing: 02.06.2023

(51) International Patent Classification (IPC):
B01D 71/56 (2006.01)   B01D 69/00 (2006.01)
B01D 69/02 (2006.01)   B01D 69/10 (2006.01)
B01D 69/12 (2006.01)

(52) Cooperative Patent Classification (CPC):
B01D 69/00; B01D 69/02; B01D 69/10;
B01D 69/12; B01D 71/56

(86) International application number:
PCT/JP2023/020705

(87) International publication number:
WO 2023/234415 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.06.2022 JP 2022090653

(71) Applicant: Toray Industries, Inc.
Tokyo 103-8666 (JP)

(72) Inventors:
• TANAKA Hiroaki
  Otsu-shi, Shiga 520-8558 (JP)
• MINEHARA Hiroki
  Otsu-shi, Shiga 520-8558 (JP)
• MARUO Yuya
  Otsu-shi, Shiga 520-8558 (JP)

(74) Representative: Hoefer & Partner Patentanwälte
mbB
Pilgersheimer Straße 20
81543 München (DE)

(54) COMPOSITE SEMIPERMEABLE MEMBRANE AND METHOD FOR PRODUCING SAME

(57) The present invention provides a composite semipermeable membrane comprising a porous support layer and a separation functional layer located on the porous support layer, the composite semipermeable membrane having a first surface that is a surface positioned on the separation functional layer side and a second surface that is a surface positioned on the opposite side to the first surface, in which the separation functional layer contains a crosslinked polyamide, and the amino group density measured with a scanning transmission electron microscope (STEM) in a cross section taken in the thickness direction of the separation functional layer satisfies the formula: Nb/Nd $\leq$ 0.40 (wherein Nb and Nd are defined in the description).

FIG. 4

**Description**

TECHNICAL FIELD

The present invention relates to a composite semipermeable membrane useful for selective separation of a liquid mixture. The composite semipermeable membrane obtained according to the present invention can be suitably used for desalination of, for example, seawater and brackish water.

BACKGROUND ART

Regarding separation of a mixture, there are various techniques for removing substances (for example, salts) dissolved in a solvent (for example, water). In recent years, membrane separation method has become increasingly used as an energy- and resource-saving process.

Examples of a membrane used in the membrane separation method include a microfiltration membrane, an ultrafiltration membrane, a nanofiltration membrane, and a reverse osmosis membrane. These membranes are used, for example, for production of drinking water from seawater, brackish water, water containing harmful substances, and the like, production of industrial ultrapure water, wastewater treatment, recovery of valuable materials, and the like.

Patent Literature 1 discloses a composite semipermeable membrane including a porous support membrane and a separation functional layer containing a crosslinked polyamide coated on the porous support membrane as a separation membrane having high water permeability and removability. The separation functional layer is formed on the porous support membrane by a polycondensation reaction between a polyfunctional amine and a polyfunctional acid halide.

CITATION LIST

PATENT LITERATURE

Patent Literature 1: JP2001-79372A

SUMMARY OF INVENTION

TECHNICAL PROBLEM

However, there is an increasing need for energy saving during operation, and the water permeability of the composite semipermeable membrane is required to be further improved compared to the water permeability in the related art. On the other hand, increasing the water permeability of the composite semipermeable membrane causes a problem of a corresponding decrease in removability.

Therefore, an object of the present invention is to provide a composite semipermeable membrane excellent in water permeability and removability.

SOLUTION TO PROBLEM

The present invention for solving the above problems includes the following configurations [1] to [11].

[1] A composite semipermeable membrane including a porous support layer and a separation functional layer provided on the porous support layer, in which

the composite semipermeable membrane has a first surface which is a surface on a separation functional layer side and a second surface which is a surface opposite to the first surface,
the separation functional layer contains a crosslinked polyamide, and
an amino group density measured by a scanning transmission electron microscope (STEM) in a cross section in a thickness direction of the separation functional layer satisfies $Nb/Nd \leq 0.40$,
Nb: an amino group density of a region b,
Nd: an amino group density of a region d, and
regions a to e: regions obtained by dividing the cross section into five equal parts in the thickness direction of the separation functional layer, the regions a to e being aligned from the first surface toward the second surface.

[2] The composite semipermeable membrane according to the [1], in which
Nb is $1.0 \times 10^{-24}$ mol/nm$^2$ or less and Nd is $2.5 \times 10^{-24}$ mol/nm$^2$ or more.

[3] The composite semipermeable membrane according to the [1] or [2], in which
C/(A + B) is 1.7 or more, provided that A is an amount of terminal amino groups, B is an amount of terminal carboxy groups, and C is an amount of amide groups, in the crosslinked polyamide.
[4] The composite semipermeable membrane according to any one of the [1] to [3], in which

the separation functional layer includes a thin film containing the crosslinked polyamide as a main component, and
a thickness of the thin film is 9.0 nm or more and 13.0 nm or less.

[5] The composite semipermeable membrane according to any one of the [1] to [4], in which
the following Formulas (1) to (5) are satisfied when water containing 500 ppm of sodium chloride, 20 ppm of silica, and 1 ppm of boron is permeated through the composite semipermeable membrane at an operating pressure of 0.75 MPa:

$$\text{Silica removal rate} \geq 99.30\% \quad \text{Formula (1);}$$

$$\text{Boron removal rate} \geq 60\% \quad \text{Formula (2);}$$

$$\text{Permeated water flow rate} \geq 0.85 \ \text{m}^3/\text{m}^2/\text{day} \quad \text{Formula (3);}$$

$$99.90\% > \text{NaCl removal rate} \geq 99.50\% \quad \text{Formula (4);}$$

and

$$(\text{NaCl removal rate}) - (\text{silica removal rate}) \leq 0.20\% \quad \text{Formula (5).}$$

[6] A method for producing a composite semipermeable membrane, the method including:

contacting a polyfunctional amine solution containing a compound X with a polyfunctional acid halide solution containing a compound Y on a porous support layer to form a polyamide layer by an interfacial polycondensation reaction, in which
octanol/water partition coefficients of the compound X and the compound Y satisfy the following Formulas (6) to (8):

$$\text{LogP(X)} < 0 \quad \text{Formula (6);}$$

$$\text{LogP(Y)} < 0 \quad \text{Formula (7);}$$

and

$$\text{LogP(X)/LogP(Y)} < 0.50 \quad \text{Formula (8).}$$

[7] The method for producing a composite semipermeable membrane according to the [6], in which
a moisture content in an organic solvent in which the polyfunctional acid halide is dissolved is 50 ppm or less.
[8] The method for producing a composite semipermeable membrane according to the [6] or [7], the method including:
contacting, on the porous support layer, the polyfunctional amine solution with the polyfunctional acid halide solution in an amount of 200 mL/m$^2$ or more and 400 mL/m$^2$ or less relative to a surface area of the porous support layer to form the polyamide layer by the interfacial polycondensation reaction.
[9] A method for producing ultrapure water, the method including a reverse osmosis step of removing silica from a silica-containing aqueous solution using the composite semipermeable membrane according to any one of the [1] to [5].
[10] The method for producing ultrapure water according to the [9], the method further including a pretreatment step of removing a suspended substance from the silica-containing aqueous solution prior to the reverse osmosis step.
[11] The method for producing ultrapure water according to the [9] or [10], the method further including a step of removing a solute salt from an aqueous solution treated in the reverse osmosis step using an ion exchange resin.
[12] A composite semipermeable membrane element including the composite semipermeable membrane according to any one of the [1] to [5].

[13] A composite semipermeable membrane module including the composite semipermeable membrane element according to the [12].

ADVANTAGEOUS EFFECTS OF INVENTION

A composite semipermeable membrane according to the present invention can form a surface pore size sufficient for removing a solute while reducing resistance to water permeation by providing a gradient in amino group density in a membrane thickness direction of a separation functional layer, thereby achieving both high water permeability and high removability.

BRIEF DESCRIPTION OF DRAWINGS

[FIG. 1] FIG. 1 is a cross-sectional view showing a schematic configuration of a composite semipermeable membrane according to one embodiment of the present invention.
[FIG. 2] FIG. 2 is a cross-sectional view showing a pleated structure of a thin film in a separation functional layer.
[FIG. 3] FIG. 3 is a schematic diagram illustrating a method for measuring 10-point average surface roughness.
[FIG. 4] FIG. 4 is a cross-sectional view showing regions a to e in the thin film of the separation functional layer.
[FIG. 5] FIG. 5 is a flowchart showing a step of a ultrapure water production method according to an embodiment of the present invention.

DESCRIPTION OF EMBODIMENTS

Hereinafter, an embodiment of the present invention will be described in detail, but the present invention is not limited thereto in any way.

In the present description, "mass" is synonymous with "weight".

(1) Composite Semipermeable Membrane

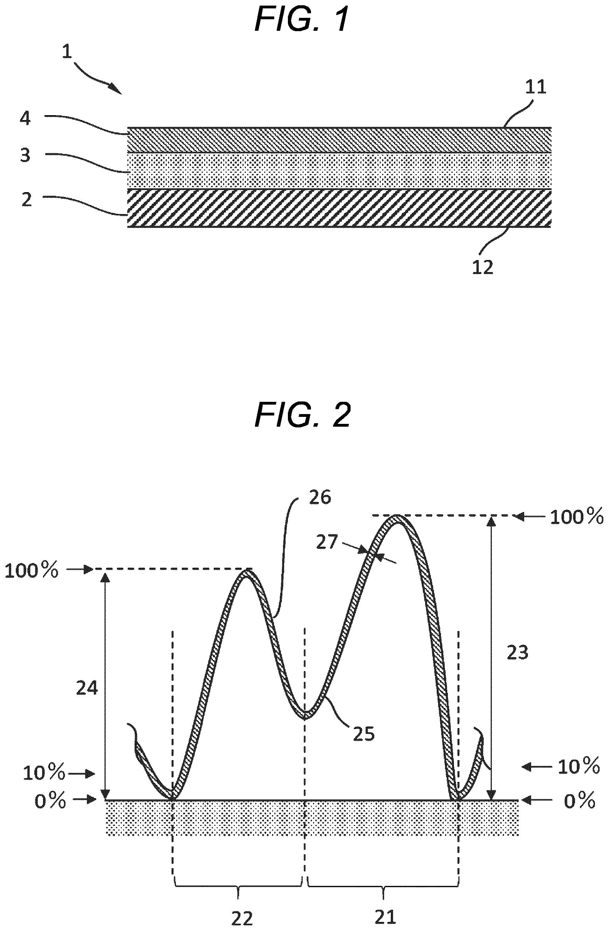

A composite semipermeable membrane according to the present invention includes a porous support layer and a separation functional layer located on the porous support layer. As shown in FIG. 1, in the present embodiment, a surface of a composite semipermeable membrane 1 on a separation functional layer 4 side is called a first surface 11, and a surface opposite to the first surface is called a second surface 12.

(1-1) Separation Functional Layer

(1-1-1) Composition

Among components of the composite semipermeable membrane, a separation functional layer substantially has separation performance for a solute. In a cross-sectional view of the composite semipermeable membrane shown in FIG. 1, the separation functional layer 4 is disposed on a porous support layer 3.

The separation functional layer contains a crosslinked polyamide, and preferably contains a crosslinked polyamide as a main component.

In the present specification, the phrase "X contains Y as a main component" means that Y accounts for 50 mass% or more, 80 mass% or more, or 90 mass% or more of X, and also includes the case in which X only contains Y.

The crosslinked polyamide refers to a polycondensate of a polyfunctional amine and a polyfunctional acid halide.

Here, the polyfunctional amine refers to an amine having at least two primary amino groups and/or secondary amino groups in one molecule with at least one of the amino groups being a primary amino group. Examples of the polyfunctional amine include: polyfunctional aromatic amines such as phenylenediamine in which two amino groups are bonded to a benzene ring in an ortho-positional, a meta-positional, or a para-positional relationship, xylylenediamine, 1,3,5-triaminobenzene, 1,2,4-triaminobenzene, 3,5-diaminobenzoic acid, 3-aminobenzylamine, and 4-aminobenzylamine; aliphatic amines such as ethylenediamine and propylenediamine; and alicyclic polyfunctional amines such as 1,2-diaminocyclohexane, 1,4-diaminocyclohexane, 4-aminopiperidine, and 4-aminoethylpiperazine.

Among these polyfunctional amines, in consideration of selective separation performance, permeability, and heat resistance of the composite semipermeable membrane, the polyfunctional amine is preferably a polyfunctional aromatic amine having 2 or more and 4 or less primary amino groups and/or secondary amino groups in one molecule. As such a polyfunctional aromatic amine, for example, m-phenylenediamine, p-phenylenediamine, and 1,3,5-triaminobenzene are preferably used. Among these polyfunctional aromatic amines, m-phenylenediamine (hereinafter referred to as m-PDA) is more preferably used in view of availability and ease of handling.

These polyfunctional amines may be used alone or in combination of two or more thereof. When two or more polyfunctional amines are used in combination, the amines described above may be used in combination, or an amine described above may be used in combination with an amine having at least two secondary amino groups in one molecule. Examples of the amine having at least two secondary amino groups in one molecule include piperazine and 1,3-bispiperidylpropane.

The polyfunctional acid halide refers to an acid halide having at least two halogenated carbonyl groups in one molecule. Examples of a trifunctional acid halide include: trimesic acid chloride (hereinafter referred to as "TMC"); 1,3,5-cyclohexanetricarboxylic acid trichloride; and 1,2,4-cyclobutanetricarboxylic acid trichloride.

Examples of a bifunctional acid halide include: aromatic bifunctional acid halides such as biphenyl dicarboxylic acid dichloride, azobenzene dicarboxylic acid dichloride, terephthalic acid chloride, isophthalic acid chloride, and naphthalene dicarboxylic acid chloride; aliphatic bifunctional acid halides such as adipoyl chloride and sebacoyl chloride; and alicyclic bifunctional acid halides such as cyclopentanedicarboxylic acid dichloride, cyclohexanedicarboxylic acid dichloride, and tetrahydrofurandicarboxylic acid dichloride.

In consideration of reactivity with the polyfunctional amines, the polyfunctional acid halide is preferably a polyfunctional acid chloride. Further, in consideration of the selective separation performance and the heat resistance of the composite semipermeable membrane, the polyfunctional acid halide is more preferably a polyfunctional aromatic acid chloride having two or more and four or less carbonyl chloride groups in one molecule. Among these polyfunctional acid halides, trimesic acid chloride is more preferable from the viewpoint of the availability and the ease of handling. These polyfunctional acid halides may be used alone or two or more thereof may be used in combination.

The separation functional layer preferably has a thin film having a pleated structure. The thin film preferably contains the crosslinked polyamide as the main component. From the viewpoint of obtaining sufficient separation performance and a permeated water flow rate, a thickness of the thin film is preferably 8.0 nm or more, and more preferably 9.0 nm or more. On the other hand, the thickness of the thin film is preferably 20.0 nm or less, and more preferably 13.0 nm or less.

The thickness of the thin film having the pleated structure can be controlled, for example, by concentrations of the polyfunctional amine and the polyfunctional acid halide which are monomers, and an amount of a polyfunctional acid halide solution applied relative to a surface area of the porous support layer, as described below in a "step of forming separation functional layer".

The thickness of the thin film can be measured by photographing a cross section of the thin film having the pleated structure with a transmission electron microscope (hereinafter referred to as "TEM") and reading a cross section photograph into image analysis software for analysis. Specifically, in a TEM image of a cross section of the separation functional layer, any five convex portions formed of the thin film are selected. In one convex portion (reference numerals 21 and 22 in FIG. 2), the thickness (reference numeral 27 in FIG. 2) of the thin film is measured at 10 points within a region extending up to 90% of a height (reference numerals 23 and 24 in FIG. 2) from an apex of the convex portion. That is, as shown in FIG. 2, a surface of the porous support layer is 0% of the height, the apex of the convex portion is 100% of the height, and 10 measurement points are arbitrarily selected within a range of 10% to 100% of the height. An arithmetic mean value calculated from thicknesses of 50 points obtained in this way is the "thickness of the thin film".

Here, the convex portion to be measured when calculating the thickness of the thin film is a convex portion having a height equal to or greater than one-fifth of 10-point average surface roughness.

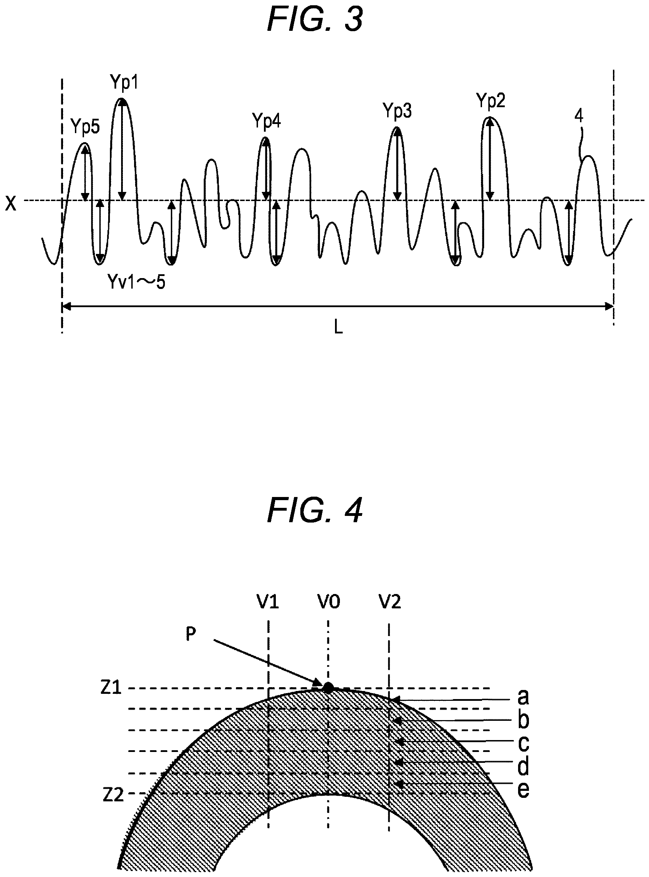

The 10-point average surface roughness is calculated as follows. First, a cross section in a direction perpendicular to a membrane surface is observed using an electron microscope. An observation magnification is preferably 10,000 to 100,000. In an obtained cross-sectional image, as shown in FIG. 3, a surface of the separation functional layer 4 appears as a pleated curve with continuously repeated convex and concave portions. For this curve, a roughness curve defined based on JIS B 0601:2013 (ISO 4287:1997) is obtained. A cross-sectional image is taken with a width of 2.0 $\mu$m as a reference length L in a direction of an average line X of the roughness curve.

From this average line of the taken portion, a sum of a mean value of absolute values of elevations of the highest to fifth peaks (Ypl to Yp5) on the roughness curve and a mean value of absolute values of elevations of the lowest to fifth valleys (Yv1 to Yv5) is calculated, and this value expressed in nanometers (nm) is the 10-point average surface roughness (FIG. 3).

The average line is a straight line defined in accordance with ISO 4287:1997, and refers to a straight line drawn such that total areas of regions surrounded by the average line and the roughness curve above and below the average line are equal in a measurement length.

In the present embodiment, a median value of the heights of the convex portions of the separation functional layer is preferably 80 nm or more, more preferably 120 nm or more, and still more preferably 160 nm or more, from the viewpoint of obtaining a sufficient permeated water flow rate. On the other hand, the median value of the heights of the convex portions of the separation functional layer is preferably 300 nm or less.

The median value of the heights of the convex portions is calculated as follows. In the composite semipermeable membrane, cross sections of any ten points are observed, and the heights of the convex portions that are one-fifth or more of the above-mentioned 10-point average surface roughness are measured in each cross section. Further, the median value of the heights of the convex portions can be obtained by calculating the median value based on calculation results for the 10 cross sections. Here, each cross section has a width of 2.0 μm in a direction of the average line of the roughness curve.

The convex portion refers to a portion between apexes of adjacent portions (concave portions) that are convex toward the porous support layer in the thin film of the separation functional layer. As shown in FIG. 2, one of both ends (apexes of the concave portion) of the convex portion may be separated from the surface of the porous support layer and the other may be in contact with the surface of the porous support layer, or the both ends thereof may be in contact with the porous support layer, or the both ends may be separated from the porous support layer.

The height of the convex portion of the separation functional layer can be controlled by adjusting diffusibility of the polyfunctional amine into an organic layer, for example, by adding, to an aqueous layer or the organic layer, an additive that interacts with the polyfunctional amine through hydrogen bonding or the like.

(1-1-2) Characteristics

In the composite semipermeable membrane according to the present invention, amino group density measured by the scanning transmission electron microscope (hereinafter referred to as "STEM") in a cross section (cross section perpendicular to the first surface) in a thickness direction of the separation functional layer satisfies $Nb/Nd \leq 0.40$. Here, Nb means amino group density in a region b, and Nd means amino group density in a region d. Further, as shown in FIG. 4, each region is a region obtained by dividing the cross section of the separation functional layer in the thickness direction into five equal parts, and is arranged in the order of regions a to e from the first surface to the second surface.

The separation functional layer, which contains, as the main component, the crosslinked polyamide formed by interfacial polycondensation, has the amino group and a carboxy group as terminal functional groups. In a region in which the amino group density is high, the separation functional layer has a sparse structure, which results in low water permeation resistance and high water permeability, but solute removing performance is insufficient. On the other hand, in a region in which amino group density is low, the separation functional layer has a dense structure, which results in high water permeation resistance and low water permeability, but the solute removing performance is improved.

The present inventors have found that the separation functional layer having a gradient structure of the amino group density that satisfies $Nb/Nd \leq 0.40$ can achieve both particularly high water permeability and removing performance. From the viewpoint of achieving both the water permeability and the removing performance, Nb/Nd is preferably 0.05 or more, and more preferably 0.10 or more. On the other hand, Nb/Nd is preferably 0.35 or less, and more preferably 0.30 or less.

As described later in the "step of forming separation functional layer", Nb/Nd can be controlled, for example, by a type or a concentration of a compound X contained in a polyfunctional amine solution or a compound Y contained in the polyfunctional acid halide solution, a moisture content contained in an organic solvent that dissolves the polyfunctional acid halide, and an amount of a polyfunctional acid chloride solution applied relative to the surface area of the porous support layer.

(i) Regions a to e of Separation Functional Layer

An operation of immersing the composite semipermeable membrane in an aqueous solution of sodium tungstate (IV) for 7 minutes is repeated four times. The cross section of the separation functional layer in this composite semipermeable membrane is photographed by STEM at a magnification of 100,000. In the obtained image, in any region of each convex portion of the separation functional layer (thin film) that is within 50% to 100% of the height thereof, a reference point P is determined on an outer surface 26 (surface facing a side opposite to the porous support layer) of the thin film, and with a normal line V0 passing through the reference point P as a center, straight lines V1 and V2 parallel to the normal line V0 are drawn on both sides of the normal line V0 at intervals of 3 nm to 10 nm. Further, a tangent line Z1 to the outer surface of the thin film passing through the reference point P and a tangent line Z2 to an inner surface 25 (surface on a side in contact with the porous support layer) of the thin film that is parallel to the tangent line Z1 are drawn. Between Z1 and Z2, four straight lines dividing this interval into five equal parts are drawn. Regions surrounded by V1 and V2 and also surrounded by Z1, Z2 and the straight lines between Z1 and Z2 are designated as the regions a to e in order from the outer surface side of the thin film (FIG. 4). An area of each of the regions a to e is set to 5 nm$^2$ or more and 30 nm$^2$ or less.

(ii) Amino Group Density

In the regions a to e, luminance is measured by the STEM. For minimum luminance Lmin and maximum luminance Lmax of the measured values, areas of portions showing luminance of {Lmin + (Lmax - Lmin)/3} or more are integrated for each region. This integrated value means an area of a portion having an amino group labeled with tungsten (W). The amino group density (mol/nm$^2$) can be calculated by dividing the obtained integrated value by an area (0.04 nm$^2$) per amino group molecule, Avogadro's constant (6.0 × 10$^{23}$ molecules/mol), and the area of each region. A mean value of the amino group density obtained for the five convex portions of the thin film is taken as the amino group density of each region.

In the composite semipermeable membrane according to the present embodiment, Nb is preferably 1.0 × 10$^{-24}$ mol/nm$^2$ or less and Nd is preferably 2.5 × 10$^{-24}$ mol/nm$^2$ or more. A membrane having low amino group density near a surface layer has a polyamide structure that is dense enough to be suitable for removing a solute, and from the viewpoint of improving removability of the membrane, Nb is more preferably 0.8 × 10$^{-24}$ mol/nm$^2$ or less, and still more preferably 0.6 × 10$^{-24}$ mol/nm$^2$ or less. On the other hand, from the viewpoint of ensuring the water permeability of the membrane, Nb is preferably 0.2 × 10$^{-24}$ mol/nm$^2$ or more, and more preferably 0.4 × 10$^{-24}$ mol/nm$^2$ or more.

Further, a membrane having high amino group density on an inner layer side of the separation functional layer has a polyamide structure that is sparse enough to reduce water permeation resistance, and from the viewpoint of improving the water permeability of the membrane, Nd is more preferably 2.7 × 10$^{-24}$ mol/nm$^2$ or more, and still more preferably 3.0 × 10$^{-24}$ mol/nm$^2$ or more. On the other hand, from the viewpoint of maintaining physical strength of the functional layer, Nd is preferably 3.5 × 10$^{-24}$ mol/nm$^2$ or less, and more preferably 3.0 × 10$^{-24}$ mol/nm$^2$ or less.

As described later in the "step of forming separation functional layer", Nb and Nd can be controlled, for example, by a type or a concentration of the compound X contained in the polyfunctional amine solution or the compound Y contained in the polyfunctional acid halide solution, a moisture content contained in the organic solvent that dissolves the polyfunctional acid halide, and an amount of the polyfunctional acid chloride solution applied relative to the surface area of the porous support layer.

(iii) Amount A of Terminal Amino Groups, Amount B of Terminal Carboxy Groups, and Amount C of Amide Groups of Crosslinked Polyamide

An amount A of terminal amino groups, an amount B of terminal carboxy groups, and an amount C of amide groups of the crosslinked polyamide in the composite semipermeable membrane can be calculated by $^{13}$C solid-state nuclear magnetic resonance measurement (hereinafter referred to as "$^{13}$C solid-state NMR measurement") of the separation functional layer. Specifically, a substrate is peeled from the composite semipermeable membrane to obtain the separation functional layer and the porous support layer, and then the porous support layer is removed by dissolving to obtain the separation functional layer. The obtained separation functional layer is subjected to $^{13}$C solid-state NMR measurement by a DD/MAS method, and each ratio is calculated based on a comparison with a carbon peak of each functional group or integrated values of the carbon peak to which each functional group is bonded.

From the viewpoint of improving the removing performance and physical strength, the composite semipermeable membrane according to the present embodiment preferably has a ratio (C/(A + B)) of the amount C of amide groups to a sum of the amount A of terminal amino groups and the amount B of terminal carboxy groups of the crosslinked polyamide of 1.7 or more. C/(A + B) means a ratio of an amount of amide groups to an amount of terminal groups of the crosslinked polyamide. By relatively increasing the amount of amide groups, which are crosslinking points, denseness of the membrane is improved, and removability of the solute and chemical and physical strength of the separation functional layer are increased. For the reasons described above, C/(A + B) is more preferably 1.8 or more, and still more preferably 1.9 or more. On the other hand, from the viewpoint of ensuring the water permeability, C/(A + B) is preferably 2.2 or less, and more preferably 2.1 or less.

The amount A of terminal amino groups, the amount B of terminal carboxy groups, and the amount C of amide groups of the crosslinked polyamide can be controlled, for example, by concentrations or a polymerization time of the polyfunctional amine and the polyfunctional acid halide which are monomers.

(iv) Separation Characteristics

The composite semipermeable membrane according to the present embodiment is suitable for separating nonionic solutes in addition to ionic solutes such as sodium chloride, and is characterized by a difference between removability of each solute.

The composite semipermeable membrane according to the present embodiment preferably has a silica removal rate of 99.30% or more, and more preferably 99.45% or more, when feed water containing 500 ppm of sodium chloride (hereinafter referred to as "NaCl"), 20 ppm of nonionic silica, and 1 ppm of boron is permeated at an operating pressure of 0.75 MPa. Further, a boron removal rate is preferably 60% or more, and more preferably 65% or more. Furthermore, a NaCl removal rate is preferably 99.50% or more, more preferably 99.60% or more, while the NaCl removal rate is preferably less than 99.90%. In addition, a difference between the NaCl removal rate and the silica removal rate is preferably 0.20% or less.

When the silica removal rate, the boron removal rate, the NaCl removal rate, and the difference between the NaCl removal rate and the silica removal rate are within the above ranges, it is possible to obtain high-quality permeated water while simultaneously preventing a concentration of solutes such as scale on the membrane surface.

Here, the removal rate of each solute is expressed as $100 \times \{1 - (\text{solute concentration in permeated water/solute concentration in feed water})\}$.

From the viewpoint of reducing energy consumption during a membrane operation, the permeated water flow rate under the above conditions is preferably $0.85 \text{ m}^3/\text{m}^2/\text{day}$ or more.

(1-2) Porous Support Layer

The porous support layer serves as a scaffold for forming the separation functional layer, and does not have substantial separation performance for ions and the like.

For a size and a distribution of pores in the porous support layer, the porous support layer is preferably, for example, a porous support layer having uniform and fine pores or gradually larger fine pores from the surface on which the separation functional layer is formed to the other surface, and the size of the fine pores on the surface on which the separation functional layer is formed is preferably 0.1 nm or more and 100 nm or less.

The porous support layer can be obtained, for example, by casting a high molecular weight polymer onto a substrate that is a fabric made of at least one material selected from polyester and aromatic polyamide. The composite semipermeable membrane according to the present embodiment may include the porous support layer and the separation functional layer, but may also include a substrate 2 and the porous support layer 3 disposed on the substrate 2, as shown in FIG. 1. Hereinafter, a configuration in which a porous support layer is formed on a substrate may be referred to as a "support membrane".

As a material of the porous support layer, homopolymers or copolymers such as polysulfones, polyethersulfones, polyamides, polyesters, cellulose-based polymers, vinyl polymers, polyphenylene sulfides, polyphenylene sulfide sulfones, polyphenylene sulfones, and polyphenylene oxides can be used alone or blended for use. Examples of the cellulose-based polymer include cellulose acetate and cellulose nitrate, and examples of the vinyl polymer include a polyethylene, a polypropylene, a polyvinyl chloride, and polyacrylonitrile. Among these polymers, materials for the porous support layer are preferably homopolymers or copolymers such as polysulfones, polyamides, polyesters, cellulose acetates, cellulose nitrates, polyvinyl chlorides, polyacrylonitriles, polyphenylene sulfides, and polyphenylene sulfide sulfones. Materials for the porous support layer are preferably cellulose acetate, polysulfone, polyphenylene sulfide sulfone, or polyphenylene sulfone. Furthermore, among these materials, polysulfones can be generally and preferably used because the polysulfones have high chemical, mechanical, and thermal stability and are easily molded.

For example, a N,N-dimethylformamide (hereinafter referred to as "DMF") solution of polysulfone is cast onto a tightly woven polyester fabric or a polyester nonwoven fabric at a certain thickness, and then wet-coagulated in water, so that a support membrane can be obtained in which most of a surface has fine pores with a diameter of 10 nm or less.

A thickness of the support membrane affect strength of the obtained composite semipermeable membrane and packing density when the composite semipermeable membrane is used as an element. From the viewpoint of obtaining sufficient mechanical strength and packing density, the thickness of the support membrane is preferably 30 μm or more, and more preferably 100 μm or more. On the other hand, the thickness of the support membrane is preferably 300 μm or less, and more preferably 220 μm or less.

A form of the porous support layer can be observed with a scanning electron microscope, a transmission electron microscope, an interatomic microscope, or the like. For example, in the case of observation with the scanning electron microscope, the porous support layer peeled from the substrate is cut by a freeze-fractionation method to obtain a sample for cross-sectional observation. This sample is thinly coated with platinum, platinum-palladium or ruthenium tetrachloride and observed with an ultra-high-resolution field-emission scanning electron microscope (hereinafter referred to as "UHR-FE-SEM") at an acceleration voltage of 3 kV to 15 kV. As the UHR-FE-SEM, an S-900 type electron microscope manufactured by Hitachi, Ltd. or the like can be used.

The thickness of a porous support layer is preferably 20 μm or more and 100 μm or less. By setting the thickness of the porous support layer to 20 μm or more, good pressure resistance can be obtained and a uniform support membrane without defects can be obtained. The composite semipermeable membrane having such a porous support layer exhibits good salt removing performance. Further, by setting the thickness of the porous support layer to 100 μm or less, an amount of unreacted substances remaining during production can be reduced, and a decrease in permeated water flow rate and a decrease in chemical resistance can be prevented.

(2) Production Method

(2-1) Step of Forming Porous Support Layer

A step of forming the porous support layer includes a step of applying a polymer solution to a substrate and a step of immersing the substrate with the applied solution in a coagulating bath to coagulate a polymer.

In the step of applying the polymer solution to the substrate, the polymer solution is prepared by dissolving the polymer, which is a component of the porous support layer, in a good solvent for the polymer.

A temperature of the polymer solution during the application of the polymer solution is preferably 10°C or higher and 60°C or lower when, for example, polysulfone is used as the polymer. When the temperature of the polymer solution is within this range, the polymer solution is sufficiently impregnated between the fibers of the substrate without the polymer being precipitated, and then solidified. As a result, the porous support layer is firmly bonded to the substrate owing to an anchor effect, and a good support membrane can be obtained. A preferred temperature range of the polymer solution can be appropriately adjusted according to a type of used polymer, desired solution viscosity, and the like.

After the polymer solution is applied onto the substrate, a time until the substrate is immersed in the coagulating bath is preferably 0.1 seconds or more and 5 seconds or less. When the time until the immersion in the coagulating bath is within this range, an organic solvent solution containing the polymer is sufficiently impregnated between the fibers of the substrate and then solidified. A preferable range of the time until the immersion in the coagulating bath can be appropriately adjusted according to a type of the used polymer solution, desired solution viscosity, and the like.

As the coagulating bath, water is generally used, but there is no particular limitation as long as the coagulating bath does not dissolve the polymer that is a component of the porous support layer. A membrane form of the obtained support membrane changes depending on a composition of the coagulating bath, and therefore the obtained composite semipermeable membrane also changes. A temperature of the coagulating bath is preferably -20°C or higher and 100°C or lower, and more preferably 10°C or higher and 50°C or lower. When the temperature of the coagulating bath is within this range, a vibration of a coagulating bath surface which is caused by thermal motion does not become intense, and smoothness of a membrane surface after the membrane formation is maintained. Further, when the temperature is within this range, a coagulation rate is appropriate and film-forming properties are good.

Next, the obtained support membrane is then washed with hot water to remove any remaining solvent in the membrane. A temperature of the hot water is preferably 40°C or higher and 100°C or lower, and more preferably 60°C or higher and 95°C or lower. When the temperature of the hot water is within this range, a degree of shrinkage of the support membrane does not increase, and the permeated water flow rate is good. Further, when the temperature of the hot water is within this range, a sufficient cleaning effect is obtained.

(2-2) Step of Forming Separation Functional Layer

A method for producing a composite semipermeable membrane according to the present embodiment includes: contacting the polyfunctional amine solution containing the compound X with the polyfunctional acid halide solution containing the compound Y on the porous support layer to form a polyamide layer by an interfacial polycondensation reaction, and octanol/water partition coefficients of the compound X and the compound Y satisfy the following Formulas (6) to (8):

$$LogP(X) < 0 \qquad \text{Formula (6)}$$

$$LogP(Y) < 0 \qquad \text{Formula (7)}$$

$$LogP(X)/LogP(Y) < 0.50 \qquad \text{Formula (8)}$$

Here, LogP(X) means an octanol/water partition coefficient of the compound X, and LogP(Y) means an octanol/water partition coefficient of the compound Y.

The preferred embodiments of the polyfunctional amine and the polyfunctional acid halide are the same as those described above. Hereinafter, a step will be described taking as an example a case in which a polyfunctional aromatic amine is used as the polyfunctional amine and a polyfunctional aromatic acid chloride is used as the polyfunctional acid halide.

An organic solvent that dissolves the polyfunctional aromatic acid chloride may be any solvent that is immiscible with water, does not destroy the support membrane, and does not inhibit a reaction for producing a crosslinked aromatic polyamide. Representative examples thereof include liquid hydrocarbons and halogenated hydrocarbons such as trichlorotrifluoroethane. In consideration of a substance that does not break an ozone layer, ease of availability, ease of handling, and safety in handling, octane, nonane, decane, undecane, dodecane, tridecane, tetradecane, heptadecane, hexadecane, cyclooctane, ethylcyclohexane, 1-octene, 1-decene, and the like, or mixtures thereof, are preferably used.

An aqueous solution containing the polyfunctional aromatic amine contains the compound X having an octanol/-water partition coefficient of less than 0, the organic solvent that dissolves the polyfunctional aromatic acid chloride contains the compound Y also having an octanol/water partition coefficient of less than 0, and a ratio of the octanol/water partition coefficients of the compound X and the compound Y, that is, LogP(X)/LogP(Y), is less than 0.50. When LogP(X)/LogP(Y) satisfies this range, the compound X and the compound Y are appropriately mixed at an interface during polymerization, and an intermediate layer that promotes a polymerization reaction is stably produced, so that a polyamide separation functional layer having high separation performance is formed.

On the other hand, when LogP(X)/LogP(Y) is 0.50 or more, it is difficult for either the compound X or the compound Y to move in the layer, so that it is difficult to form the intermediate layer that promotes the polymerization reaction, and it is difficult to form the polyamide separation functional layer having high separation performance.

Examples of the compound X and the compound Y include compounds having a polyoxyalkylene structure, a fatty acid structure, an amide structure, an ether structure, a sulfo group or a hydroxyl group.

Examples of the polyoxyalkylene structure include $-(CH_2CH_2O)_n-$, $-(CH_2CH_2(CH_3)O)_n-$, $-(CH_2CH_2CH_2O)_n-$, $-(CH_2CH_2CH_2CH_2O)_n-$, and the like.

Examples of the fatty acid structure include fatty acids having a long-chain aliphatic group. The long-chain aliphatic group may be linear or branched, and examples thereof include salts of stearic acid, oleic acid, lauric acid, and palmitic acid.

Examples of a compound having a sulfo group include salts of 1-hexane sulfonic acid, 1-octane sulfonic acid, 1-decane sulfonic acid, 1-dodecane sulfonic acid, perfluorobutane sulfonic acid, toluene sulfonic acid, cumene sulfonic acid, and octylbenzene sulfonic acid.

Examples of a compound having a hydroxyl group include ethylene glycol, propylene glycol, 1,3-propanediol, 1,4-butanediol, glycerin, sorbitol, glucose, and sucrose.

Examples of the amide compound include N-methylformamide, N,N-dimethylformamide, N,N-dimethylacetamide, N,N-diethylformamide, N,N-diethylacetamide, N-methylpyrrolidinone, $\gamma$-butyrolactam, and $\varepsilon$-caprolactam.

Examples of a compound having an ether structure include ethylene glycol dimethyl ether, ethylene glycol diethyl ether, ethylene glycol dibutyl ether, diethylene glycol dimethyl ether, diethylene glycol methyl ethyl ether, diethylene glycol butyl methyl ether, diethylene glycol isopropyl methyl ether, diethylene glycol diacetate, diethylene glycol dibenzoate, diethylene glycol ethyl ether acetate, diethylene glycol butyl ether acetate, diethylene glycol bis(p-toluenesulfonic acid), diethylene glycol bis(3-aminopropyl)ether, 1,2-bis(2-aminoethoxy)ethane, dipropylene glycol dimethyl ether, tetraethylene glycol dimethyl ether, and tetraethylene glycol diethyl ether.

In order to perform the interfacial polycondensation on the porous support layer, a surface of the porous support layer is first coated with an aqueous polyfunctional aromatic amine solution. A concentration of the polyfunctional aromatic amine in the aqueous polyfunctional aromatic amine solution is preferably 0.1 mass% or more and 20 mass% or less, and more preferably 0.5 mass% or more and 15 mass% or less.

Further, a concentration of the compound X is preferably 0.1 mass% or more and 10 mass% or less, and more preferably 0.5 mass% or more and 5 mass% or less, from the viewpoint of sufficiently achieving the formation of the intermediate layer and preventing a disturbance of the intermediate layer and stably forming the separation functional layer.

A method for coating the surface of the porous support layer with the aqueous polyfunctional aromatic amine solution may be any method that uniformly and continuously coats the surface of the porous support layer with an aqueous solution, and examples of such a method include a known coating method, such as a method for coating the surface of the porous support layer with an aqueous solution and a method for immersing the porous support layer in the aqueous solution. A contact time between the porous support layer and the aqueous polyfunctional aromatic amine solution is preferably 5 seconds or longer and 10 minutes or shorter, and more preferably 10 seconds or longer and 3 minutes or shorter. Next, it is preferable to remove the excessively applied aqueous solution by a liquid draining step. A method for draining a liquid may be, for example, a method in which a membrane surface is held vertically and the liquid is allowed to naturally flow down. After the liquid is drained off, the membrane surface may be dried to remove all or a part of water of the aqueous solution.

Thereafter, the above polyfunctional aromatic acid chloride solution is applied to the porous support layer coated with the aqueous polyfunctional aromatic amine solution to form the crosslinked aromatic polyamide by the interfacial polycondensation.

In the method for producing the composite semipermeable membrane according to the present embodiment, the moisture content in the organic solvent in which the polyfunctional acid halide is dissolved is preferably 50 ppm or less. By reducing moisture in the organic solvent, the inhibition of the polycondensation reaction between the polyfunctional amine and the polyfunctional acid halide caused by the moisture can be prevented, and an appropriate surface pore size can be formed. For the above reasons, the moisture content in the organic solvent in which the halide is dissolved is more preferably 30 ppm or less. Further, by setting the moisture content in the organic solvent in which the polyfunctional acid halide is dissolved to 50 ppm or less, the inhibition of the polymerization reaction is prevented, and density of the surface layer of the separation functional layer can be maintained at a high level. Accordingly, it is possible to easily produce the separation functional layer in which amide group density $Nb$ is low near the surface layer of the separation functional layer and amide group density $Nd$ is high on an inner layer side thereof.

The moisture content in the organic solvent can be measured by Karl Fischer titration method described in JIS K0068:2001. The Karl Fischer method includes a volumetric titration method, a coulometric titration method, or the like, but the coulometric titration method is more suitable for analyzing a trace amount of moisture in the organic solvent.

The method for producing the composite semipermeable membrane according to the present embodiment preferably further includes: contacting the polyfunctional amine solution with the polyfunctional acid chloride solution in an amount of 200 mL/$m^2$ or more and 400 mL/$m^2$ or less relative to the surface area of the porous support layer on the porous support layer to form the crosslinked polyamide layer by the interfacial polycondensation. By setting the amount of the polyfunctional acid chloride solution applied relative to the surface area of the porous support layer in the range of 200 mL/$m^2$ or more and 400 mL/$m^2$ or less, the intermediate layer has an appropriate ratio, an interfacial polymerization reaction proceeds appropriately, and a separation functional layer having desired amide group density or thickness can be produced.

A time for carrying out the interfacial polycondensation is preferably 0.1 seconds or more and 3 minutes or less, and more preferably 0.1 seconds or more and 1 minute or less.

A concentration of the polyfunctional aromatic acid chloride in a polyfunctional aromatic acid chloride-containing solution is not particularly limited, but is preferably 0.01 mass% or more and 1.0 mass% or less from the viewpoint of sufficient formation of the separation functional layer and from the viewpoint of a cost.

Further, a concentration of the compound Y is preferably 0.01 mass% or more and 1.0 mass% or less, and more preferably 0.02 mass% or more and 0.5 mass% or less, from the viewpoint of sufficiently achieving the formation of the intermediate layer and preventing the disturbance of the intermediate layer and stably forming the separation functional layer.

Next, the organic solvent remaining after the reaction is preferably removed by the liquid draining step. As a method for removing the organic solvent, for example, it is possible to use a method of holding the membrane in a vertical direction and removing the excessive organic solvent by naturally flowing down. In this case, the time for holding the membrane in the vertical direction is preferably 1 minute or more and 5 minutes or less, and more preferably 1 minute or more and 3 minutes or less. The holding time of 1 minute or more makes it easier to obtain the crosslinked aromatic polyamide having desired functions, while the holding time of 5 minutes or less makes it possible to prevent an occurrence of defects due to over-drying of the organic solvent, thereby preventing a decrease in performance.

3. Use of Composite Semipermeable Membrane

The composite semipermeable membrane according to the present embodiment is wound around a tubular water collection pipe in which a large number of holes are bored together with a raw water channel material such as a plastic net, a permeated water channel material such as a tricot, and a film for increasing pressure resistance as necessary, to be suitably used as a spiral type composite semipermeable membrane element. Further, the composite semipermeable membrane can also be used as a composite semipermeable membrane module in which such elements are connected in series or in parallel and accommodated in a pressure vessel.

The composite semipermeable membrane, the element thereof, and the module thereof, in combination with a pump for supplying raw water thereto, a device for pretreating the raw water, and the like, can implement a fluid separation device. By using this separation device, the raw water can be separated into the permeated water, such as drinking water, and concentrated water, which does not permeate the membrane, to obtain intended water.

A feed water temperature of the fluid separation device is preferably 5°C or higher and 45°C or lower from the viewpoint of improving a salt removal rate and the membrane permeation flux. Further, in order to prevent generation of scale such as magnesium and to prevent deterioration of the membrane, it is preferable to operate the fluid separation device while keeping pH of the feed water in a neutral region.

The module using the composite semipermeable membrane according to the present embodiment is characterized in that separation properties of the nonionic solutes are high. For example, the module can be particularly suitably introduced into processes in which ultrapure water is produced from raw water containing ultratrace amounts of organic matter and silicates, such as in an ultrapure water production process used in semiconductor production.

(3-1) Ultrapure Water Production Method

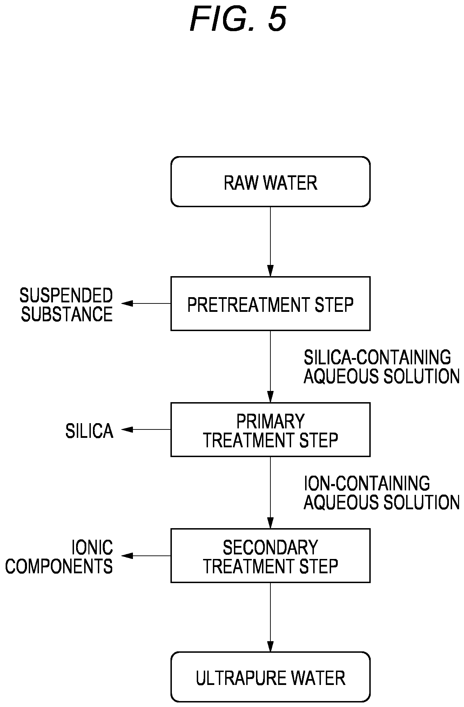

A method for producing ultrapure water to be described below includes, as shown in FIG. 5, a pretreatment step of removing a suspended substance from raw water, a primary treatment step (reverse osmosis step) including a reverse osmosis membrane that removes silica from an aqueous solution after the pretreatment step, and a secondary treatment step of removing ionic components from an aqueous solution that has been subjected to a step including the reverse osmosis membrane.

In the method for producing ultrapure water according to the present embodiment, only the reverse osmosis step is essential, and the other steps are optionally performed. Each of the above steps will now be described in detail.

(3-2) Pretreatment Step

(3-2-1) Raw water

The feed water (raw water) targeted in the present embodiment is an aqueous solution containing silica (silica-containing aqueous solution), and specific examples thereof include river water, ground water, recycled wastewater, and cooling water blow water. Silica often exists as silicates, and a charged state thereof changes depending on a pH of the raw water, but it is difficult to have a charge in a neutral range (pH 6 to 8). A charged state of boric acid also changes depending on a pH of the raw water, but it is difficult to have a charge in the neutral range (pH 6 to 8).

(3-2-2) Pretreatment Method

The method for producing ultrapure water according to the present embodiment preferably includes the pretreatment step of removing the suspended substance from the silica-containing aqueous solution prior to the primary treatment step (reverse osmosis step) to be described below. The suspended substance contained in the raw water can cause clogging (fouling) if the suspended substance adheres to a surface of the reverse osmosis membrane in the subsequent primary treatment step, and thus the fouling can be prevented by passing some or all of the raw water through a microfiltration membrane (MF membrane) or an ultrafiltration membrane (UF membrane) for a filtration treatment (pretreatment) and supplying the obtained water to the primary treatment step.

(3-3)1 Primary Treatment Step (Reverse Osmosis Step)

(3-3-1) Reverse Osmosis Membrane (RO Membrane)

The method for producing ultrapure water according to the present embodiment includes the reverse osmosis step of removing silica from the silica-containing aqueous solution using the composite semipermeable membrane according to the present embodiment. That is, the method for producing ultrapure water according to the present embodiment includes a step of separating and removing silica from the raw water or the aqueous solution treated in the pretreatment step by using the composite semipermeable membrane according to the present embodiment as the reverse osmosis membrane in the primary treatment step.

The composite semipermeable membrane according to the present embodiment used as the reverse osmosis membrane preferably has removal and water permeability characteristics that satisfy the following Formulas (1) to (3) when water containing 500 ppm of NaCl, 20 ppm of silica, and 1 ppm of boron is permeated at an operating pressure of 0.75 MPa.

$$\text{Silica removal rate} \geq 99.30\% \qquad \text{Formula (1)}$$

$$\text{Boron removal rate} \geq 60\% \qquad \text{Formula (2)}$$

$$\text{Permeated water flow rate} \geq 0.85 \text{ m}^3/\text{m}^2/\text{day} \qquad \text{Formula (3)}$$

Surprisingly, it is found that the composite semipermeable membrane according to the present embodiment is resistant to a decrease in silica removal rate and has high selective separation performance even when the composite semipermeable membrane comes into contact with an oxidizing agent such as an aqueous hypochlorous acid solution, which is used as a chemical for cleaning the UF membrane in the pretreatment step or for cleaning dirt from piping. Although details of the reason therefor are unknown, sodium hypochlorite increases a size of fine pores in a pore structure of the reverse osmosis membrane, which contribute to a boric acid removal, thereby increasing water permeability. On the other hand, it is considered that by maintaining a pore size that is larger than that of boric acid but smaller than that of silica, a ratio of permeability of water to that of silica is maintained, which has an effect of preventing a decrease in the silica removal rate and lowering a silica concentration in the permeated water.

Furthermore, since a water permeation amount is high, an amount of concentrated water (waste water) can be reduced for high recovery rate operation without increasing an operating pressure, whereby a highly efficient process is achieved.

Furthermore, by using the composite semipermeable membrane according to the present embodiment that satisfies the following Formulas (4) and (5), a load on the subsequent secondary treatment step can be reduced, a highly efficient process can be achieved, and the generation of silica scale on the membrane surface can be prevented, which is preferable.

$$99.90\% > \text{NaCl removal rate} \geq 99.50\% \quad \text{Formula (4)}$$

$$(\text{NaCl removal rate}) - (\text{silica removal rate}) \leq 0.20\% \quad \text{Formula (5)}$$

Although the details of the above actions are unknown, the following mechanism is conceivable. When an aqueous solution containing silica and other ions is filtrated, components removed at the surface of the reverse osmosis membrane are concentrated on the membrane surface, resulting in a high concentration. Silica normally has solubility in water of 120 mg/L at 25°C, and if this solubility is exceeded, silica precipitates as scale, covers the surface of the reverse osmosis membrane, and causes filtration resistance, resulting in a decrease in water permeability. On the other hand, the solubility of silica in water decreases as a surrounding ion concentration increases. Therefore, it is considered that when a sodium chloride removal rate is high, a total concentration of ions such as sodium chloride that are concentrated on the membrane surface is locally high, and similarly, silica that is concentrated on the membrane surface exceeds the solubility and precipitates, forms the scale that covers the surface of the reverse osmosis membrane, and reduces the water permeability.

When a value obtained by subtracting the silica removal rate from the NaCl removal rate is greater than 0.20%, although not all the details are clear, it is considered that there is significant unevenness in the membrane structure which affects the removability, resulting in a mixture of portions having high and low removability, and that a sodium chloride concentration on the membrane surface is high in the portion having the high removability and the solubility of silica decreases, which leads to the formation of the silica scale, resulting in filtration resistance and a decrease in water permeability.

(3-3-2) Operation Method

In the filtration through the reverse osmosis membrane, the raw water or the pretreated aqueous solution is preferably supplied to the reverse osmosis membrane at a pressure in a range of 0.10 MPa or more and 12 MPa or less. When the pressure is 0.10 MPa or more, a decrease in the membrane permeation rate of water can be prevented, and when the pressure is 12 MPa or less, a possibility of an influence on membrane damage can be reduced. Further, supplying the aqueous solution at a pressure of 0.25 MPa or more and 6 MPa or less is more preferable because the membrane permeation flux is high, allowing the aqueous solution to permeate efficiently and reducing the possibility of the influence on membrane damage, and supplying the aqueous solution at a pressure of 0.25 MPa or more and 1 MPa or less is particularly preferable. When the reverse osmosis membrane has a permeated water flow rate of 0.85 $m^3/m^2$/day or more, a sufficient permeated water flow rate can be obtained even when operated at a low pressure of 1 MPa or less, energy consumption per unit of produced fresh water and a cost of producing the fresh water can be reduced, and it is possible to design equipment using a small-scale pump, thereby enabling space savings.

The primary treatment step may be a multi-stage treatment, that is, the pretreated aqueous solution may be filtrated through a first reverse osmosis membrane, and the obtained permeated water may be treated again through a second reverse osmosis membrane. Further, in order to reduce the waste water and increase a recovery rate, concentrated water obtained by filtrating through the first reverse osmosis membrane may be treated through the second reverse osmosis membrane.

(3-4) Secondary Treatment Step

The method for producing ultrapure water according to the present embodiment preferably further includes a step of removing a solute salt from the aqueous solution treated in the reverse osmosis step using an ion exchange resin. That is, it is preferable to include the secondary treatment step in which the ionic components are removed from the aqueous solution, which is the permeated water obtained in the primary treatment step, to produce the ultrapure water. In the secondary treatment step, the ion exchange resin (ion exchanger) is preferably used.

As a method using the ion exchange resin, an ion exchange device including a cation exchange resin and an anion exchange resin may be used, or an electric regeneration type deionization (hereinafter referred to as "EDI") may be used. The EDI is a device that includes a desalting compartment separated by an ion exchange membrane and filled with an ion exchanger, a concentrating compartment that concentrates ions desalted in the desalting compartment, and an anode and a cathode for passing an electric current, and is operated by passing the electric current to simultaneously perform a deionization (desalting) process of the water to be treated using the ion exchanger and a regeneration process of the ion exchanger. The treated water which has been passed through the EDI is desalted by the ion exchanger filled in the desalting compartment, and is discharged outside the EDI as EDI treated water. Similarly, concentrated water in which ions are concentrated is discharged to an outside as EDI concentrated water.

Further, the secondary treatment step may include a UV treatment. When the aqueous solution supplied from the primary treatment step has a high silica concentration, silica precipitates on a surface of the ion exchange resin in the secondary treatment step, which causes a decrease in treatment efficiency or deterioration in the secondary treatment step.

Examples

Hereinafter, the present invention will be described with reference to examples, but the present invention is not limited to these examples.

[1. Measurement of Characteristics]

(Moisture Content of Organic Solvent in Interfacial Polycondensation)

The moisture content was measured by Karl Fischer coulometric titration method using a trace moisture measurement device (CA-200, manufactured by Mitsubishi Chemical Analytech Co., Ltd.).

(NaCl Removal Rate, Silica Removal Rate, and Boron Removal Rate)

Feed water adjusted to a temperature of 25°C, pH 7, sodium chloride 500 ppm, sodium metasilicate 87 ppm (20 ppm as silica), and boric acid 5.7 ppm (1 ppm as boron) was supplied to the composite semipermeable membrane at an operating pressure of 0.75 MPa and subjected to a membrane filtration treatment. Electrical conductivity of the feed water and the permeated water was measured with an electric conductivity meter (CM-41X, manufactured by DKK-TOA CORPORATION) to obtain practical salinity, that is, NaCl concentrations thereof. The NaCl removal rate was calculated from the obtained NaCl concentration based on the following formula. Here, the NaCl concentration (ppm) means a concentration on a mass basis.

NaCl removal rate (%) = 100 $\times$ {1 - (NaCl concentration in permeated water/NaCl concentration in feed water)}.

Further, silica concentrations and boron concentrations of the feed water and the permeated water were measured using an ICP emission analyzer (5110VDV manufactured by Agilent, Ltd.), and the silica removal rate and the boron removal rate were calculated using the following formulas.

Silica removal rate (%) = 100 $\times$ {1 - (silica concentration in permeated water/silica concentration in feed water)} Boron removal rate (%) = 100 $\times$ {1 - (boron concentration in permeated water/boron concentration in feed water)}

(Permeated Water Flow Rate)

In the tests described above, a volume of the feed water permeating through the membrane was measured, and a value converted into a volume of permeated water (cubic meter) per square meter of the membrane surface and per day was expressed as the permeated water flow rate ($m^3/m^2$/day).

(Preparation of Sample for Amino Group Density Measurement)

A 5 cm square composite semipermeable membrane from which a substrate was physically peeled off was treated by a freezing superthin section method, placed on a grid, and immersed in pure water for 4 hours, and then immersed in a 10 mass% aqueous solution of 2-propanol for 1 hour and washed. Thereafter, an operation of immersing a sample in a $1.0 \times 10^{-3}$ mol/L aqueous solution of $Na_2WO_4 \cdot 2H_2O$ adjusted to pH 3.8 and 25°C for 10 minutes was performed three times in total, and then an operation of immersing the sample in a $1.0 \times 10^{-7}$ mol/L aqueous solution of $Na_2WO_4 \cdot 2H_2O$ adjusted to pH 3.8 and 25°C for 7 minutes was performed four times in total. Thereafter, moisture in the sample was removed using a filter paper and then freeze-dried to prepare a sample for amino group density measurement.

(Amino Group Density)

The composite semipermeable membrane sample prepared above was photographed using a field emission type transmission electron microscope (HF5000 manufactured by Hitachi High-Tech Corporation) under a condition of an acceleration voltage of 200 kV, and a STEM image at a magnification of 100,000 was obtained. Thereafter, the obtained image was analyzed using image processing software, and the amino group density for each of the regions a to e was calculated from a luminance value using the method described in the above "(ii) Amino Group Density".

(Amount A of Terminal Amino Groups, Amount B of Terminal Carboxy Groups, and Amount C of Amide Groups)

The substrate was physically peeled off from a 5 m$^2$ composite semipermeable membrane, and the porous support layer and the separation functional layer were collected. The porous support layer and the separation functional layer were allowed to stand at 25°C for 24 hours for drying, and then added little by little into a beaker containing dichloromethane and stirred to dissolve a polymer constituting the porous support layer, and an insoluble matter in the beaker was collected with a filter paper. The insoluble matter was charged into a beaker containing dichloromethane, followed by stirring, to collect the insoluble matter in the beaker. This operation was repeated until elution of the polymer forming the porous support layer in a dichloromethane solution could not be detected. The collected separation functional layer was dried in a vacuum dryer to remove remaining dichloromethane. The obtained separation functional layer was freeze-ground into a powder sample and was sealed in a sample tube used for solid NMR measurement, and $^{13}$C solid NMR measurement was performed by a CP/MAS method and a DD/MAS method. For $^{13}$C solid NMR measurement, CMX-300 manufactured by Chemagnetics was used. Measurement conditions are shown below.

Reference material: polydimethylsiloxane (internal reference: 1.56 ppm)
Sample rotation speed: 10.5 kHz
Pulse repetition time: 100 s

From the obtained spectrum, peak division was performed for each peak derived from a carbon atom to which each functional group was bonded, and an amount ratio of the functional group was determined based on an area of the peak obtained by division.

(NaCl Removal Rate after Contact with aqueous sodium hypochlorite solution)

A reverse osmosis membrane (10 cm x 10 cm) was immersed in 5 L of an aqueous solution containing sodium hypochlorite at 10 mg/L and adjusted to pH 7, and was hold at 25°C for 96 hours. Thereafter, the NaCl removal rate was measured by the method described above in "NaCl Removal Rate, Silica Removal Rate, and Boron Removal Rate".
When the NaCl removal rate after contact with an aqueous sodium hypochlorite solution was 98.90% or more, it was determined that resistance to performance degradation caused by contact with sodium hypochlorite was good.

(Silica Scale Deposit Amount)

The membrane filtration treatment of the feed water was performed by the method described above in "NaCl Removal Rate, Silica Removal Rate, and Boron Removal Rate". For a composite semipermeable membrane in which a total permeated water flow rate reached 100 L/m$^2$, deposits on the membrane surface were extracted with a 1 mass% aqueous nitric acid solution, a total adsorption amount (mg) of silica components was measured using an ICP emission analyzer (5110VDV manufactured by Agilent, Ltd.), and a silica scale deposit amount (mg/m$^2$) was calculated from a membrane area of the separation membrane element.
When the silica scale deposit amount was less than 0.2 mg/m$^2$, it was determined that resistance to silica scale formation was good.

[2. Preparation of Composite Semipermeable Membrane]

(Comparative Example 1)

A 15.0 mass% DMF solution of polysulfone was cast onto a polyester nonwoven fabric (air permeability of 2.0 cc/cm$^2$/s) made of long fibers under a condition of 25°C, and immediately immersed in pure water and allowed to stand for 5 minutes to prepare a support membrane in which a thickness of a porous support layer was 40 μm. Next, after this support membrane was immersed in a 2.0 mass% m-PDA aqueous solution, excess aqueous solution was removed, and a solution prepared using n-decane having a moisture content of 40 ppm so as to have a TMC concentration of 0.10 mass% was applied at 300 mL/m$^2$ so that a surface of the porous support layer was completely wetted. Next, in order to remove the excess solution from the membrane, the membrane was turned vertically to drain the liquid, dried by blowing air at 25°C using a blower, and then washed with pure water at 80°C to obtain a composite semipermeable membrane in Comparative Example 1.

(Comparative Example 2)

A 15.0 mass% DMF solution of polysulfone was cast onto a polyester nonwoven fabric (air permeability of 2.0 cc/cm$^2$/s) made of long fibers under a condition of 25°C, and immediately immersed in pure water and allowed to stand for 5 minutes to prepare a support membrane in which a thickness of a porous support layer was 40 $\mu$m. Next, after this support membrane was immersed in an aqueous solution containing 2.0 mass% m-PDA and 1.5 mass% dipropylene glycol (hereinafter referred to as "DPG"; octanol/water partition coefficient: -1.50) as the compound X, excess aqueous solution was removed, and a solution prepared using n-decane having a moisture content of 40 ppm so as to have a TMC concentration of 0.10 mass% and a N,N-dimethylacetamide (hereinafter referred to as "DMAc"; octanol/water partition coefficient: -0.77) concentration as the compound Y of 0.1 mass% was applied at 300 mL/m$^2$ so that a surface of the porous support layer was completely wetted. Next, in order to remove the excess solution from the membrane, the membrane was turned vertically to drain the liquid, dried by blowing air at 25°C using the blower, and then washed with pure water at 80°C to obtain a composite semipermeable membrane in Comparative Example 2.

(Comparative Example 3)

A composite semipermeable membrane in Comparative Example 3 was obtained in the same manner as in Comparative Example 2 except that the compound X was changed to 1.0 mass% ethylene glycol dimethyl ether (hereinafter referred to as "EGDME"; octanol/water partition coefficient: -0.21) and the compound Y was changed to 0.1 mass% diethylene glycol methyl ethyl ether (hereinafter referred to as "DEGMEE"; octanol/water partition coefficient: -0.10).

(Comparative Example 4)

A composite semipermeable membrane in Comparative Example 4 was obtained in the same manner as in Comparative Example 2 except that the compound X was changed to 1.5 mass% DMAc and the compound Y was changed to 0.1 mass% EGDME.

(Comparative Example 5)

A composite semipermeable membrane in Comparative Example 5 was obtained in the same manner as in Comparative Example 2 except that the compound X was changed to 1.0 mass% EGDME, and the compound Y was changed to 0.1 mass% of diethylene glycol dimethyl ether (hereinafter referred to as "DEGDME"; octanol/water partition coefficient: -0.36).

(Comparative Example 6)

A composite semipermeable membrane in Comparative Example 6 was obtained in the same manner as in Comparative Example 2 except that the compound X was changed to 1.2 mass% of DEGMEE, and the compound Y was changed to 0.1 mass% of diethylene glycol ethyl ether acetate (hereinafter referred to as "DEGEEAc"; octanol/water partition coefficient: 0.24).

(Comparative Example 7)

A 15.0 mass% DMF solution of polysulfone was cast onto a polyester nonwoven fabric (air permeability of 2.0 cc/cm$^2$/s) made of long fibers under a condition of 25°C, and immediately immersed in pure water and allowed to stand for 5 minutes to prepare a support membrane in which a thickness of a porous support layer was 40 $\mu$m. Next, after this support membrane was immersed in an aqueous solution containing 2.0 mass% m-PDA and 1.5 mass% DPG as the compound X, excess aqueous solution was removed, and a solution prepared using n-decane having a moisture content of 40 ppm so as to have a TMC concentration of 0.10 mass% was applied at 300 mL/m$^2$ so that a surface of the porous support layer was completely wetted. Next, in order to remove the excess solution from the membrane, the membrane was turned vertically to drain the liquid, dried by blowing air at 25°C using the blower, and then washed with pure water at 80°C to obtain a composite semipermeable membrane in Comparative Example 7.

(Comparative Example 8)

A 15.0 mass% DMF solution of polysulfone was cast onto a polyester nonwoven fabric (air permeability of 2.0 cc/cm$^2$/s) made of long fibers under a condition of 25°C, and immediately immersed in pure water and allowed to stand for 5 minutes to prepare a support membrane in which a thickness of a porous support layer was 40 $\mu$m. Next, after this support membrane was immersed in a 2.0 mass% m-PDA aqueous solution, excess aqueous solution was removed, and a solution prepared using n-decane having a moisture content of 40 ppm so as to have a TMC concentration of 0.10 mass% and a DMAc concentration of 0.1 mass% as the compound Y was applied at 300 mL/m$^2$ so that a surface of the porous support layer was completely wetted. Next, in order to remove the excess solution from the membrane, the membrane was turned vertically to drain the liquid, dried by blowing air at 25°C using the blower, and then washed with pure water at 80°C to obtain a composite semipermeable membrane in Comparative Example 8.

(Comparative Example 9)

A composite semipermeable membrane in Comparative Example 9 was obtained in the same manner as in Comparative Example 8 except that the compound Y was changed to 0.1 mass% DEGEEAc.

(Example 1)

A composite semipermeable membrane in Example 1 was obtained in the same manner as in Comparative Example 2 except that the compound X was changed to 1.2 mass% DEGMEE and the compound Y was changed to 0.1 mass% DEGDME.

(Example 2)

A composite semipermeable membrane in Example 2 was obtained in the same manner as in Comparative Example 2 except that the compound X was changed to 1.0 mass% EGDME, and the compound Y was changed to 0.03 mass% $\gamma$-butyrolactam (octanol/water partition coefficient: -0.71).

(Example 3)

A composite semipermeable membrane in Example 3 was obtained in the same manner as in Comparative Example 2 except that the compound X was changed to 1.4 mass% $\varepsilon$-caprolactam (octanol/water partition coefficient; -0.19), and the compound Y was changed to 0.02 mass% N-methylformamide (hereinafter referred to as "NMF"; octanol/water partition coefficient: -0.97).

(Example 4)

A composite semipermeable membrane in Example 4 was obtained in the same manner as in Comparative Example 2 except that the compound X was changed to 1.2 mass% DEGMEE, and the compound Y was changed to 0.1 mass% diethylene glycol diacetate (hereinafter referred to as "DEGAc"; octanol/water partition coefficient: -0.49).

(Example 5)

A composite semipermeable membrane in Example 5 was obtained in the same manner as in Example 4, except that an n-decane solution having a moisture content of 20 ppm was used.

(Example 6)

A composite semipermeable membrane in Example 6 was obtained in the same manner as in Example 4, except that an amount of the applied n-decane solution was changed to 180 mL/m$^2$.

(Example 7)

A composite semipermeable membrane in Example 7 was obtained in the same manner as in Example 4, except that an amount of the applied n-decane solution was changed to 420 mL/m$^2$.

(Example 8)

A composite semipermeable membrane in Example 8 was obtained in the same manner as in Example 7, except that an n-decane solution having a moisture content of 70 ppm was used.

Structures of the composite semipermeable membranes obtained in Comparative Examples 1 to 9 and Examples 1 to 8 are shown in Table 1, and performance thereof is shown in Table 2.

Table 1

|  | X | | Y | | LogP(X)/-LogP(Y) | Moisture content of organic solvent |
|---|---|---|---|---|---|---|
|  | Type | Mass% | Type | Mass% | - | ppm |
| Comp. Ex. 1 | - | - | - | - | - | 40 |
| Comp. Ex. 2 | DPG | 1.5 | DMAc | 0.1 | 1.95 | 40 |
| Comp. Ex. 3 | EGDME | 1.0 | DEGMEE | 0.1 | 2.10 | 40 |
| Comp. Ex. 4 | DMAc | 1.5 | EGDME | 0.1 | 3.67 | 40 |
| Comp. Ex. 5 | EGDME | 1.0 | DEGDME | 0.1 | 0.58 | 40 |
| Comp. Ex. 6 | DEGMEE | 1.2 | DEGEEAc | 0.1 | -0.42 | 40 |
| Comp. Ex. 7 | DPG | 1.5 | - | - | - | 40 |
| Comp. Ex. 8 | - | - | DMAc | 0.1 | - | 40 |
| Comp. Ex. 9 | - | - | DEGEEAc | 0.1 | - | 40 |
| Ex. 1 | DEGMEE | 1.2 | DEGDME | 0.1 | 0.28 | 40 |
| Ex. 2 | EGDME | 1.0 | γ-butyrolactam | 0.03 | 0.30 | 40 |
| Ex. 3 | ε-caprolactam | 1.4 | NMF | 0.02 | 0.20 | 40 |
| Ex. 4 | DEGMEE | 1.2 | DEGAc | 0.1 | 0.20 | 40 |
| Ex. 5 | DEGMEE | 1.2 | DEGAc | 0.1 | 0.20 | 20 |
| Ex. 6 | DEGMEE | 1.2 | DEGAc | 0.1 | 0.20 | 40 |
| Ex. 7 | DEGMEE | 1.2 | DEGAc | 0.1 | 0.20 | 40 |
| Ex. 8 | DEGMEE | 1.2 | DEGAc | 0.1 | 0.20 | 70 |

Table 1 (continued)

|  | Applied amount | Nb | Nd | Nb/Nd | C/(A + B) | Thickness of thin film |
|---|---|---|---|---|---|---|
|  | mL/m$^2$ | mol/nm$^2$ | mol/nm$^2$ | - | - | nm |
| Comp. Ex. 1 | 300 | $3.2 \times 10^{-24}$ | $2.1 \times 10^{-24}$ | 1.52 | 1.3 | 12.1 |
| Comp. Ex. 2 | 300 | $2.2 \times 10^{-24}$ | $2.8 \times 10^{-24}$ | 0.79 | 1.4 | 11.8 |
| Comp. Ex. 3 | 300 | $2.2 \times 10^{-24}$ | $1.8 \times 10^{-24}$ | 1.22 | 1.4 | 12.8 |
| Comp. Ex. 4 | 300 | $1.3 \times 10^{-24}$ | $1.9 \times 10^{-24}$ | 0.68 | 1.3 | 10.0 |
| Comp. Ex. 5 | 300 | $1.2 \times 10^{-24}$ | $2.0 \times 10^{-24}$ | 0.65 | 1.6 | 13.2 |
| Comp. Ex. 6 | 300 | $0.9 \times 10^{-24}$ | $1.6 \times 10^{-24}$ | 0.56 | 1.5 | 12.5 |
| Comp. Ex. 7 | 300 | $2.6 \times 10^{-24}$ | $2.0 \times 10^{-24}$ | 1.30 | 1.2 | 9.1 |
| Comp. Ex. 8 | 300 | $1.5 \times 10^{-24}$ | $1.8 \times 10^{-24}$ | 0.83 | 1.1 | 8.7 |
| Comp. Ex. 9 | 300 | $2.3 \times 10^{-24}$ | $2.2 \times 10^{-24}$ | 1.05 | 1.3 | 10.8 |
| Ex. 1 | 300 | $0.9 \times 10^{-24}$ | $2.7 \times 10^{-24}$ | 0.33 | 1.8 | 12.3 |

(continued)

|  | Applied amount | Nb | Nd | Nb/Nd | C/(A + B) | Thickness of thin film |
|---|---|---|---|---|---|---|
|  | mL/m$^2$ | mol/nm$^2$ | mol/nm$^2$ | - | - | nm |
| Ex. 2 | 300 | $0.7 \times 10^{-24}$ | $2.9 \times 10^{-24}$ | 0.24 | 1.8 | 10.5 |
| Ex. 3 | 300 | $0.6 \times 10^{-24}$ | $2.6 \times 10^{-24}$ | 0.23 | 1.9 | 11.9 |
| Ex. 4 | 300 | $0.8 \times 10^{-24}$ | $3.0 \times 10^{-24}$ | 0.27 | 1.8 | 11.4 |
| Ex. 5 | 300 | $0.4 \times 10^{-24}$ | $2.9 \times 10^{-24}$ | 0.14 | 1.9 | 12.1 |
| Ex. 6 | 180 | $0.6 \times 10^{-24}$ | $1.7 \times 10^{-24}$ | 0.35 | 1.7 | 14.2 |
| Ex. 7 | 420 | $1.3 \times 10^{-24}$ | $3.5 \times 10^{-24}$ | 0.37 | 1.5 | 8.5 |
| Ex. 8 | 420 | $1.2 \times 10^{-24}$ | $3.3 \times 10^{-24}$ | 0.36 | 1.6 | 10.9 |

Table 2

|  | Permeated water flow rate | Silica removal rate | Boron removal rate | NaCl removal rate | (NaCl removal rate) - (silica removal rate) | Silica removal rate after contact with sodium hypochlorite | Silica scale deposit amount after permeation at 100L/m$^2$ |
|---|---|---|---|---|---|---|---|
|  | m$^3$/m$^2$/day | % | % | % | % | % | mg/m$^2$ |
| Comp. Ex. 1 | 0.65 | 99.22 | 70 | 99.43 | 0.21 | 98.78 | 0.2 |
| Comp. Ex. 2 | 0.85 | 98.76 | 60 | 99.21 | 0.45 | 98.29 | 0.3 |
| Comp. Ex. 3 | 0.97 | 99.01 | 56 | 99.39 | 0.38 | 98.45 | 0.3 |
| Comp. Ex. 4 | 0.96 | 99.14 | 57 | 99.29 | 0.15 | 98.64 | 0.2 |
| Comp. Ex. 5 | 0.88 | 99.16 | 60 | 99.42 | 0.26 | 98.61 | 0.2 |
| Comp. Ex. 6 | 0.72 | 98.57 | 65 | 98.89 | 0.32 | 98.02 | 0.3 |
| Comp. Ex. 7 | 0.77 | 99.18 | 66 | 99.40 | 0.22 | 98.59 | 0.2 |
| Comp. Ex. 8 | 0.69 | 99.05 | 68 | 99.39 | 0.34 | 98.44 | 0.3 |
| Comp. Ex. 9 | 0.73 | 98.95 | 62 | 99.31 | 0.36 | 98.37 | 0.3 |
| Ex. 1 | 0.92 | 99.45 | 64 | 99.61 | 0.16 | 99.49 | 0.1 |
| Ex. 2 | 1.01 | 99.55 | 67 | 99.65 | 0.10 | 99.39 | 0.1 |
| Ex. 3 | 1.03 | 99.53 | 66 | 99.59 | 0.06 | 99.42 | 0.1 |
| Ex. 4 | 0.93 | 99.56 | 73 | 99.61 | 0.05 | 99.37 | 0.1 |
| Ex. 5 | 0.91 | 99.65 | 77 | 99.67 | 0.02 | 99.50 | 0.1 |
| Ex. 6 | 0.85 | 99.61 | 66 | 99.68 | 0.07 | 99.44 | 0.1 |
| Ex. 7 | 0.98 | 99.41 | 63 | 99.63 | 0.22 | 99.38 | 0.2 |
| Ex. 8 | 1.01 | 99.32 | 62 | 99.58 | 0.26 | 99.36 | 0.2 |

As described above, membranes in Examples 1 to 8, in which Nb/Nd is 0.40 or less, are membranes that achieve both high water permeability and high removability. In particular, the membranes in which Nb is $1.0 \times 10^{-24}$ mol/nm$^2$ or less and Nd is $2.5 \times 10^{-24}$ mol/nm$^2$ or more as in Examples 1 to 5 show particularly high performance.

The preferred embodiment of the present invention has been described above, but the present invention is not limited to the embodiment described above, and various modifications and substitutions can be made to the embodiment described above without departing from the scope of the present invention. The present application is based on the Japanese patent application (JP2022-090653) filed on June 3, 2022, the contents of which are incorporated herein by reference.

REFERENCE SIGNS LIST

1 composite semipermeable membrane
2 substrate
3 porous support layer
4 separation functional layer
11 first surface of composite semipermeable membrane
12 second surface of composite semipermeable membrane
21 convex portion i
22 convex portion ii
23 height of convex portion i
24 height of convex portion ii
25 inner surface of thin film
26 outer surface of thin film
27 thickness of thin film
X average line of roughness curve
Yp1 to Yp5 elevations of highest to fifth peaks from X
Yv1 to Yv5 elevations of lowest to fifth valleys from X
L reference length
P reference point
V0 normal line passing through reference point P
V1, V2 straight line parallel to normal line V0
Z1 tangent line to outer surface of thin film passing through reference point P
Z2 tangent line to inner surface of thin film parallel to tangent line Z1

## Claims

1. A composite semipermeable membrane comprising a porous support layer and a separation functional layer provided on the porous support layer, wherein

   the composite semipermeable membrane has a first surface which is a surface on a separation functional layer side and a second surface which is a surface opposite to the first surface,
   the separation functional layer contains a crosslinked polyamide, and
   an amino group density measured by a scanning transmission electron microscope (STEM) in a cross section in a thickness direction of the separation functional layer satisfies $Nb/Nd \leq 0.40$,
   Nb: an amino group density of a region b,
   Nd: an amino group density of a region d, and
   regions a to e: regions obtained by dividing the cross section into five equal parts in the thickness direction of the separation functional layer, the regions a to e being aligned from the first surface toward the second surface.

2. The composite semipermeable membrane according to claim 1, wherein Nb is $1.0 \times 10^{-24}$ mol/nm$^2$ or less and Nd is $2.5 \times 10^{-24}$ mol/nm$^2$ or more.

3. The composite semipermeable membrane according to claim 1 or 2, wherein C/(A + B) is 1.7 or more, provided that A is an amount of terminal amino groups, B is an amount of terminal carboxy groups, and C is an amount of amide groups, in the crosslinked polyamide.

4. The composite semipermeable membrane according to claim 1 or 2, wherein

   the separation functional layer comprises a thin film containing the crosslinked polyamide as a main component, and
   a thickness of the thin film is 9.0 nm or more and 13.0 nm or less.

5. The composite semipermeable membrane according to claim 1 or 2, wherein

the following Formulas (1) to (5) are satisfied when water containing 500 ppm of sodium chloride, 20 ppm of silica, and 1 ppm of boron is permeated through the composite semipermeable membrane at an operating pressure of 0.75 MPa:

$$\text{Silica removal rate} \geq 99.30\% \quad \text{Formula (1)};$$

$$\text{Boron removal rate} \geq 60\% \quad \text{Formula (2)};$$

$$\text{Permeated water flow rate} \geq 0.85 \ \text{m}^3/\text{m}^2/\text{day} \quad \text{Formula (3)};$$

$$99.90\% > \text{NaCl removal rate} \geq 99.50\% \quad \text{Formula (4)};$$

and

$$(\text{NaCl removal rate}) - (\text{silica removal rate}) \leq 0.20\% \quad \text{Formula (5)}.$$

6. A method for producing a composite semipermeable membrane, the method comprising:

contacting a polyfunctional amine solution containing a compound X with a polyfunctional acid halide solution containing a compound Y on a porous support layer to form a polyamide layer by an interfacial polycondensation reaction, wherein
octanol/water partition coefficients of the compound X and the compound Y satisfy the following Formulas (6) to (8):

$$\text{LogP(X)} < 0 \quad \text{Formula (6)};$$

$$\text{LogP(Y)} < 0 \quad \text{Formula (7); and}$$

$$\text{LogP(X)/LogP(Y)} < 0.50 \quad \text{Formula (8)}.$$

7. The method for producing a composite semipermeable membrane according to claim 6, wherein a moisture content in an organic solvent in which the polyfunctional acid halide is dissolved is 50 ppm or less.

8. The method for producing a composite semipermeable membrane according to claim 6 or 7, the method comprising: contacting, on the porous support layer, the polyfunctional amine solution with the polyfunctional acid halide solution in an amount of 200 mL/m$^2$ or more and 400 mL/m$^2$ or less relative to a surface area of the porous support layer to form the polyamide layer by the interfacial polycondensation reaction.

9. A method for producing ultrapure water, the method comprising a reverse osmosis step of removing silica from a silica-containing aqueous solution using the composite semipermeable membrane according to claim 1 or 2.

10. The method for producing ultrapure water according to claim 9, the method further comprising a pretreatment step of removing a suspended substance from the silica-containing aqueous solution prior to the reverse osmosis step.

11. The method for producing ultrapure water according to claim 10, the method further comprising a step of removing a solute salt from an aqueous solution treated in the reverse osmosis step using an ion exchange resin.

12. A composite semipermeable membrane element comprising the composite semipermeable membrane according to claim 1 or 2.

13. A composite semipermeable membrane module comprising the composite semipermeable membrane element according to claim 12.

# FIG. 1

# FIG. 2

## FIG. 3

## FIG. 4

# FIG. 5

```
          ┌─────────────────────────┐
          │        RAW WATER        │
          └─────────────────────────┘
                       │
                       ▼
SUSPENDED    ┌─────────────────────────┐
SUBSTANCE ◄──│    PRETREATMENT STEP    │
          └─────────────────────────┘
                       │
                       │   SILICA-CONTAINING
                       │   AQUEOUS SOLUTION
                       ▼
          ┌─────────────────────────┐
SILICA ◄──│         PRIMARY         │
          │     TREATMENT STEP      │
          └─────────────────────────┘
                       │
                       │   ION-CONTAINING
                       │   AQUEOUS SOLUTION
                       ▼
IONIC        ┌─────────────────────────┐
COMPONENTS ◄─│        SECONDARY        │
             │     TREATMENT STEP      │
             └─────────────────────────┘
                       │
                       ▼
          ┌─────────────────────────┐
          │     ULTRAPURE WATER     │
          └─────────────────────────┘
```

## INTERNATIONAL SEARCH REPORT

| International application No. |
| --- |
| **PCT/JP2023/020705** |

### A. CLASSIFICATION OF SUBJECT MATTER

***B01D 71/56***(2006.01)i; ***B01D 69/00***(2006.01)i; ***B01D 69/02***(2006.01)i; ***B01D 69/10***(2006.01)i; ***B01D 69/12***(2006.01)i
FI:  B01D71/56; B01D69/00; B01D69/02; B01D69/10; B01D69/12

According to International Patent Classification (IPC) or to both national classification and IPC

### B. FIELDS SEARCHED

Minimum documentation searched (classification system followed by classification symbols)

B01D53/22;61/00-71/82;C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2017-213500 A (TORAY INDUSTRIES) 07 December 2017 (2017-12-07) paragraphs [0019]-[0184] | 1-8, 12-13 |
| Y | | 1-13 |
| Y | JP 63-12310 A (TORAY INDUSTRIES) 19 January 1988 (1988-01-19) p. 2, upper right column, line 8 to p. 3, lower left column, line 3, p. 3, lower right column, line 3 to p. 4, lower right column, line 7 | 1-13 |
| Y | JP 2020-142178 A (KURITA WATER IND LTD) 10 September 2020 (2020-09-10) paragraphs [0016], [0031]-[0037], fig. 4 | 9-11 |
| Y | JP 2008-229506 A (KURITA WATER IND LTD) 02 October 2008 (2008-10-02) paragraphs [0016]-[0029], fig. 1 | 9-11 |
| A | 安全データシート　ジメチルホルムアミド, 厚生労働省　職場のあんぜんサイト, 15 March 2019, pp. 1-5, [online], [retrieved on 02 August 2023], Retrieved from the Internet: <URL: https://anzeninfo.mhlw.go.jp/anzen/gmsds/68-12-2.html> p. 5, non-official translation (Safety data sheet: Dimethylformamide. Ministry of Health, Labour and Welfare: Site of Workplace Safety.) | 1-13 |

☑ Further documents are listed in the continuation of Box C.　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/020705** |

**C. DOCUMENTS CONSIDERED TO BE RELEVANT**

| Category* | Citation of document, with indication, where appropriate, of the relevant passages | Relevant to claim No. |
|---|---|---|
| A | 安全データシート　ジメチルアセトアミド, 厚生労働省　職場のあんぜんサイト, 15 March 2019, pp. 1-8, [online], [retrieved on 02 August 2023], Retrieved from the Internet: <URL: https://anzeninfo.mhlw.go.jp/anzen/gmsds/127-19-5.html> p. 4, non-official translation (Safety data sheet: Dimethylformamide. Ministry of Health, Labour and Welfare: Site of Workplace Safety.) | 1-13 |

Form PCT/ISA/210 (second sheet) (January 2015)

**INTERNATIONAL SEARCH REPORT**
Information on patent family members

International application No.

**PCT/JP2023/020705**

| Patent document cited in search report | | | Publication date (day/month/year) | Patent family member(s) | | | Publication date (day/month/year) |
|---|---|---|---|---|---|---|---|
| JP | 2017-213500 | A | 07 December 2017 | (Family: none) | | | |
| JP | 63-12310 | A | 19 January 1988 | (Family: none) | | | |
| JP | 2020-142178 | A | 10 September 2020 | WO | 2020/179426 | A1 | |
| JP | 2008-229506 | A | 02 October 2008 | (Family: none) | | | |

Form PCT/ISA/210 (patent family annex) (January 2015)

**EP 4 534 187 A1**

**Patent documents cited in the description**

- JP 2001079372 A

- JP 2022090653 A